(19) Europäisches Patentamt
European Patent Office
Office européen des brevets

(11) **EP 2 674 337 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(51) Int Cl.:
***B60T 8/1755*** *(2006.01)*

(21) Anmeldenummer: **13168594.3**

(22) Anmeldetag: **21.05.2013**

(54) **Verfahren zur Erzeugung eines Schwimmwinkelsignals**

Method for generating a sideslip angle signal

Procédé destiné à générer un signal d'angle de dérapage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2012 DE 102012011837**

(43) Veröffentlichungstag der Anmeldung:
**18.12.2013 Patentblatt 2013/51**

(73) Patentinhaber: **Volkswagen Aktiengesellschaft 38440 Wolfsburg (DE)**

(72) Erfinder: **Baumgarten, Götz 38106 Braunschweig (DE)**

(56) Entgegenhaltungen:
**EP-A1- 1 588 910     DE-A1- 10 215 464
DE-A1- 10 327 695     DE-A1-102008 012 354
US-A1- 2009 276 114**

**Beschreibung**

Die Erfindung bezieht sich auf ein Verfahren zur Erzeugung eines Schwimmwinkelsignals sowie auf eine entsprechend konfigurierte Vorrichtung.

Eine für die Fahrdynamikregelung von Kraftfahrzeugen wichtige Kenngröße ist der Schwimmwinkel. Unter dem Schwimmwinkel wird der Winkel zwischen der Bewegungsrichtung des Fahrzeugschwerpunkts und der Fahrzeuglängsachse verstanden. Bei hohen Querbeschleunigungen gilt dieser als ein Maß für die Fahrstabilität. Bis zu einem Schwimmwinkel von etwa 5° wird das Fahrverhalten als stabil angesehen.

Allerdings gestaltet sich die Erzeugung eines genauen Schwimmwinkelsignals als schwierig. Wie in DE 10 2004 019 832 B3 ausgeführt, kann der Schwimmwinkel mit den für ein elektronisches Stabilitätsprogramm am Fahrzeug verfügbaren Sensoren nicht direkt gemessen werden.

Es ist daher üblich, den für die Fahrdynamikregelung benötigten Schwimmwinkel zu schätzen, wie dies beispielsweise in DE 10 2006 009 682 A1 und DE 102 15 464 A1 beschrieben ist. Diese Schätzung ist jedoch oft recht ungenau.

Beobachter-Algorithmen oder Kalmanfilter-Algorithmen, die auf Basis eines Ein- oder Zweispurmodells unter Berücksichtigung der Gierrate und der Querbeschleunigung des Fahrzeugaufbaus den Schwimmwinkel schätzen, scheitern unter dem Einfluss der Fahrbahnquerneigung, da die aufbaufest gemessene Querbeschleunigung $A_{ym}$ als kinematische Querbeschleunigung $B_y$ der Bewegungsbahn

$$B_y = \frac{V^2}{R}$$

Gl. 1

(V = Geschwindigkeit, R = Kurvenradius) aufgefasst wird. Bei horizontaler Fahrbahn ist das richtig, es gilt

$$A_{ym} = B_y = \frac{V^2}{R}$$

Gl. 2

Bei Fahrbahnquerneigung gilt das jedoch nicht mehr, hier gilt näherungsweise:

$$A_{ym} = B_y + g \cdot \sin\varphi = \frac{V^2}{R} + g \cdot \sin\varphi$$

Gl. 3

(mit Wankwinkel $\varphi$ und Gravitationsbeschleunigung g) .

Aus der US 2009 0 276 114 A1 ist ein Verfahren bekannt, bei dem ein stationäres Schwimmwinkelsignal mit einem Signal, welches eine Veränderung eines Schwimmwinkel repräsentiert, kombiniert wird, um den Schwimmwinkel abzuschätzen.

In DE 10 2004 019 832 B3 und EP 1 588 910 A1 wird vorgeschlagen, den Schwimmwinkel aus Bilddaten zu ermitteln, welche mittels eines optischen Sensors, beispielsweise einer Kamera erfasst werden. Allerdings bedeutet dies einen erheblichen Rechenaufwand, so dass das Schwimmwinkelsignal nicht in Echtzeit bereitgestellt werden kann, sondern eine gewisse Zeitverzögerung aufweist, welche unter Umständen für eine Fahrdynamikregelung inakzeptabel ist.

Der Erfindung liegt die Aufgabe zugrunde, hier Abhilfe zu schaffen.

Dazu wird ein Verfahren zur Erzeugung eines Schwimmwinkelsignals gemäß Anspruch 1 vorgeschlagen. Diese zeichnet sich dadurch aus, dass durch Auswertung von Sensorsignalen ein zeitlich verzögertes Schwimmwinkelsignal ermittelt und mit diesem zeitlich verzögerten Schwimmwinkelsignal unter Berücksichtigung verfügbarer Signale eines elektronischen Stabilitätsprogramms ein zeitlich unverzögertes Schwimmwinkelsignal erzeugt wird.

Im Unterschied zu Schätzalgorithmen basiert das erfindungsgemäße Verfahren auf Sensorsignalen, welche den Schwimmwinkel repräsentieren. Dabei wird die Zeitverzögerung, welche aus der Auswertung den Schwimmwinkel repräsentierender Sensorsignale resultiert, mit Hilfe verfügbarer Signale eines elektronischen Stabilitätsprogramms (ESP) kompensiert.

Es hat sich gezeigt, dass mit dem erfindungsgemäßen Verfahren das ermittelte zeitlich unverzögerte Schwimmwinkelsignal weitestgehend dem tatsächlichen Schwimmwinkel entspricht und für eine Fahrdynamikregelung gut geeignet ist. Selbst bei Fahrbahnquerneigung bleibt das Schwimmwinkelsignal brauchbar.

Es wird aus den verfügbaren Signalen des elektronischen Stabilitätsprogramms eine Schwimmwinkelgeschwindigkeit ermittelt und die ermittelte Schwimmwinkelgeschwindigkeit in die Erzeugung des zeitlich unverzögerten Schwimmwinkelsignals einbezogen. Dies ermöglicht eine gute Korrektur des zeitlich verzögerten Signals. Die aktuelle Schwimmwinkelgeschwindigkeit kann aus verschiedenen Berechnungsansätzen gewonnen werden, welche auf vom elektronischen Stabilitätsprogramm bereitgestellten Parametern beruhen, so dass diesbezüglich keine zusätzliche Sensorik erforderlich ist.

Vorteilhafte Ausgestaltungen der Erfindung sind in weiteren Patentansprüchen angegeben. Gemäß einer weiteren vorteilhaften Ausgestaltung der Erfindung ist in die Erzeugung des zeitlich unverzögerten Schwimmwinkelsignals eine vorgegebene Zeitkonstante T einbezogen. Dies ermöglicht eine besonders gute Abstimmung auf die Zeitverzögerung der Sensorik, welche das zeitlich verzögerte Schwimmwinkelsignal liefert.

In einer Ausführungsvariante werden als verfügbare Signale des elektronischen Stabilitätsprogramms die Gierrate, die aufbaufest gemessene Querbeschleunigung und die Fahrgeschwindigkeit ausgewertet, da aus diesen Größen die jeweils aktuelle Schwimmwinkelgeschwindigkeit recht einfach bestimmt werden kann. Erfindungsgemäß kann im Rahmen einer Signalfusion für das zeitlich unverzögerte Schwimmwinkelsignal die Schwimmwinkelgeschwindigkeit aus diesen Größen gewonnen werden.

Die Schwimmwinkelgeschwindigkeit lässt sich aus der kinematischen Beziehung

$$B_y = V \cdot \cos \beta \cdot \dot{\beta} + \dot{V} \cdot \sin \beta + r \cdot V \qquad \text{Gl. 4}$$

ermitteln durch

$$\dot{\beta} = \frac{B_y - V \cdot \sin \beta - r \cdot V}{V \cdot \cos \beta} \qquad \text{Gl. 5}$$

Vernachlässigt man die Längsbeschleunigung und ersetzt $B_y$ durch die aufbaufest gemessene Querbeschleunigung $A_{ym}$ und nimmt kleine Schwimmwinkel an, so vereinfacht sich der Ausdruck zu

$$\dot{\beta} = \frac{A_{ym}}{V} - r \qquad \text{Gl. 6}$$

dessen Variablen sämtlich durch das elektronische Stabilitätsprogramm bereit gestellt werden.

Ist ein Längsbeschleunigungssignal verfügbar, sollte besser die erste Gleichung (Gl. 5) genutzt werden.

Im Rahmen der Signalfusion des zeitlich unverzögerten Schwimmwinkelsignals wird die Zeitverzögerung des zeitlich verzögerten Schwimmwinkelsignals vorzugsweise durch ein PT1-Glied berücksichtigt, welches die vorstehend genannte Sensorik zur Generierung den Schwimmwinkel repräsentierender Signale gut abbildet.

Anstatt durch ein PT1-Glied kann die Zeitverzögerung des zeitlich verzögerten Schwimmwinkelsignals auch durch ein anderes Signalverhalten abgebildet werden, das dem jeweils eingesetzten Sensor für das zeitlich verzögerte Signal nahekommt. Beispielsweise kann anstelle eines PT1-Verhaltens insbesondere auch eine Totzeit angenommen werden.

Der Schwimmwinkel wird mit folgender Berechnungsvorschrift ermittelt, die die Verzögerung mit einem PT1-Glied modelliert:

$$\beta_{unverzögert} = \frac{T \cdot s}{T \cdot s + 1} \cdot \left( \frac{T}{T \cdot s + 1} \cdot \dot{\beta} + \beta_{verz} \right) + \beta_{verz} \qquad \text{Gl. 7}$$

wobei

$\beta_{unverzögert}$     das zeitlich unverzögerte Schwimmwinkelsignal,
$s$     die Laplace-Variable,
$T$     eine vorgegebene Zeitkonstante,
$\beta_{verz}$     das verzögerte Schwimmwinkelsignal und
$\dot{\beta}$     die Schwimmwinkelgeschwindigkeit ist.

Das zeitlich verzögerte Schwimmwinkelsignal kann beispielsweise aus Bilddaten gewonnen werden, die mit einem optischen Sensor aufgenommen worden sind. Als optischer Sensor können beispielsweise eine oder mehrere Kameras verwendet werden, die bzw. welche fortlaufend Bilddaten generieren. Insbesondere können die Bilddaten von Kamerasystemen ausgewertet werden, welche für andere Assistenzsysteme am Fahrzeug ohnehin vorhanden sind, wie beispielsweise für eine Einparkhilfe, zur Spurführung oder dergleichen.

Auf welche Weise das zeitlich verzögerte Schwimmwinkelsignal gewonnen wird, ist für die Generierung des unverzögerten Signals jedoch letztlich ohne Belang. So kann das zeitlich verzögerte Schwimmwinkelsignal beispielsweise auch aus GPS-Daten oder auf andere Art und Weise gewonnen werden.

Die oben genannte Aufgabe wird ferner durch eine Vorrichtung zur Erzeugung eines Schwimmwinkelsignals gelöst, welch im folgenden umfasst: eine erste Recheneinrichtung, welcher eingangsseitig Signale eines Sensors zur Erfassung von schwimmwinkelrelevanten Größen aufgeschaltet sind und welche aus diesen als Ausgangssignal ein zeitlich verzögertes Schwimmwinkelsignal erzeugt, ein elektronisches Stabilitätsprogramm, welches zeitlich aktuelle Signale im Bezug auf fahrdynamikrelevante Parameter bereitstellt, eine zweite Recheneinrichtung zur Ermittlung der Schwimmwinkelgeschwindigkeit aus vom elektronisches Stabilitätsprogramm bereitgestellten Parametern, und eine dritte Recheneinrichtung, die aus dem Ausgangssignal der ersten Recheneinrichtung und dem Ausgangssignal der zweiten Recheneinrichtung ein zeitlich unverzögertes Schwimmwinkelsignal erzeugt und als Ausgangsgröße bereitstellt. Die erfindungsgemäße Struktur gestattet mit geringem Aufwand die Bereitstellung eines genauen Schwimmwinkelsignals praktisch in Echtzeit. Im Vergleich zu einer Echtzeitberechnung des Schwimmwinkels unmittelbar aus Bilddaten wird hierfür eine deutlich geringere Rechenkapazität benötigt.

Wie bereits oben ausgeführt, kann der Sensor zur Erfassung von schwimmwinkelrelevanten Größen ein optischer Sensor sein, welcher Bilddaten erzeugt, oder aber auch ein GPS-Sensor oder sonstiger Sensor, welcher ein zeitlich verzögertes Signal für den Schwimmwinkel liefert.

Vorzugsweise ist die oben genannte Berechnungsvorschrift in die dritte Recheneinrichtung implementiert.

Nachfolgend wird die Erfindung anhand eines in der Zeichnung dargestellten Ausführungsbeispiels näher erläutert. Die Zeichnung zeigt in:

Figur 1    zeigt eine schematische Darstellung einer erfindungsgemäßen Vorrichtung mit einer ersten Variante (a) und einer zweiten Variante (b), und in

Figur 2    das Signalverhalten und den Verlauf verschiedener Parameter.

Die Erfindung beruht auf einer Fusion eines gemessenen zeitlich verzögerten Schwimmwinkelsignals mit an einem Kraftfahrzeug verfügbaren ESP-Signalen.

Insbesondere werden hierbei die Gierrate $r_m$, die aufbaufeste Querbeschleunigung $A_{ym}$ und die Fahrgeschwindigkeit V berücksichtigt.

Gegebenenfalls kann weiterhin die die Längsbeschleunigung berücksichtigt, wenn die Schwimmwinkelgeschwindigkeit auf Grundlage von Gl. 5 ermittelt wird. Aus Gründen der Anschaulichkeit bleibt dieser Einfluss bei der nachfolgenden Herleitung der Bestimmung eines zeitlich unverzögerten Schwimmwinkelsignals $\beta_{unverzögert}$ jedoch unberücksichtigt, so dass im Folgenden der Ausdruck

$$\dot{\beta} = \frac{A_{ym}}{V} - r$$

Gl. 6

für die Schwimmwinkelgeschwindigkeit genommen wird.

Die gesuchte Größe $\beta_{unverzögert}$ lässt sich zunächst erweitern und der erweiterte Term wie umformen:

$$\beta_{unverzögert} = \frac{T \cdot s + 1}{T \cdot s + 1} \cdot \beta_{unverzögert} = \frac{T \cdot s}{T \cdot s + 1} \beta_{unverzögert} + \frac{1}{T \cdot s + 1} \cdot \beta_{unverzögert}$$

Gl. 8

Dabei stellt s die Laplace-Variable dar. Gedanklich können nun die beiden Summanden auf der rechten Seite als verschiedene Sensoren 1 und 2 interpretiert werden:

$$\beta_{unverzögert} = \frac{T \cdot s}{T \cdot s + 1} \beta_1 + \frac{1}{T \cdot s + 1} \cdot \beta_2$$

Gl. 9

Es sein nun angenommen, dass der zweite theoretische Sensor (Index 2) eine gute stationäre Genauigkeit aufweise, jedoch stark verzögert ist, während der erste theoretische Sensor (Index 1) eine geringere stationäre Genauigkeit und schwächere oder keine Verzögerung aufweist. Durch die Ausnutzung der Stärken und das Ausblenden der Schwächen im Rahmen einer komplementären Filterung lässt sich ein Signal höherer Güte fusionieren.

Vorliegend kann das Signal des zweiten theoretischen Sensors als Verzögerungsglied erster Ordnung, d.h. als PT1-Glied interpretiert werden, wobei das noch unverzögerte Signal den Eingang und das verzögerte Signal den Ausgang darstellt:

$$\beta_{verz} = \frac{1}{T \cdot s + 1} \cdot \beta_{unverzögert} \qquad \text{Gl. 10}$$

Es lässt sich dann schreiben:

$$\beta_{unverzögert} = \frac{T \cdot s}{T \cdot s + 1} \beta_1 + \beta_{2,verz} \qquad \text{Gl. 11}$$

Die Zeitkonstante T wird dabei so gewählt, dass diese die Verzögerung des zweiten theoretischen Sensors und vorliegend die Zeitverzögerung des zeitlich verzögerten Sensorsignals $\beta_{verz}$ abbildet.

Der erste theoretische Sensor besitzt vorliegend keine Entsprechung im realen System. Man kann jedoch das Produkt aus der Laplace-Variablen und dem ersten theoretischen Sensorsignal $\beta_1$ zusammenziehen und als zeitliche Ableitung des Schwimmwinkels, d.h. als Schwimmwinkelgeschwindigkeit interpretieren.

$$\beta_{unverzögert} = \frac{T}{T \cdot s + 1} \dot{\beta}_1 + \beta_{2,verz} \qquad \text{Gl. 12}$$

Die Schwimmwinkelgeschwindigkeit $\dot{\beta}_1$ lässt sich aus Gierrate $r_m$, aufbaufester Querbeschleunigung $A_{ym}$ Fahrgeschwindigkeit V anhand von Gl. 6 wie folgt bestimmen:

$$\dot{\beta}_1 = \frac{A_{ym}}{V} - \dot{r}_m \qquad \text{Gl. 13}$$

Als komplementäre Filtergleichung ergibt sich dann.

$$\beta_{unverzögert} = \frac{T}{T \cdot s + 1} \left( \frac{A_{ym}}{V} - r_m \right)_1 + \beta_{2,verz} \qquad \text{Gl. 13}$$

Diese Gleichung führt jedoch noch nicht zum Ziel, da Messoffset-Fehler in den ESP-Signalen, beispielsweise in der Querbeschleunigung durch eine Fahrbahnquerneigung verursacht, zu starken Abweichungen im Ergebnis $\beta_{unverzögert}$ führen können.

Erfindungsgemäß wird daher die Gl. 13 einmal nach der Zeit abgeleitet, womit man zunächst zu einer offsetfreien Schwimmwinkelgeschwindigkeit gelangt:

$$\dot{\beta}_{unverzögert} = \frac{T \cdot s}{T \cdot s + 1} \left( \frac{A_{ym}}{V} - r_m \right)_1 + \frac{d}{dt} \left( \beta_{2,verz} \right) \qquad \text{Gl. 14}$$

Dieses Signal ist bei konstantem Sensoroffset oder konstanter Fahrbahnneigung offsetfrei.

Setzt man dieses Signal in Gl. 12 ein, erhält man:

$$\beta_{unverzögert} = \frac{T}{T \cdot s + 1}\left[\frac{T \cdot s}{T \cdot s + 1}\left(\frac{A_{ym}}{V} - r_m\right) + \frac{d}{dt}\left(\beta_{2,verz}\right)\right] + \frac{1}{T \cdot s + 1}\cdot\beta_{2,verz}$$

Gl. 15

und nach einigen Umformungen:

$$\beta_{unverzögert} = \frac{T \cdot s}{T \cdot s + 1}\cdot\left(\frac{T}{T \cdot s + 1}\cdot\left(\frac{A_{ym}}{V} - r_m\right) + \beta_{verz}\right) + \beta_{verz}$$

Gl. 16

Gl. 16 ermöglicht mit geringem Aufwand die Bereitstellung eines genauen, zeitlich unverzögerten Schwimmwinkelsignals in Echtzeit.

Da es verschiedene Ansätze zur Bildung der Schwimmwinkelgeschwindigkeit gibt und die Wahl dieses Ansatzes frei steht, kann die Gleichung auch mit $\dot{\beta}$ geschrieben werden;

$$\beta_{unverzögert} = \frac{T \cdot s}{T \cdot s + 1}\cdot\left(\frac{T}{T \cdot s + 1}\cdot\dot{\beta} + \beta_{verz}\right) + \beta_{verz}$$

Gl. 17

Hierzu wird das zeitlich verzögerte Schwimmwinkelsignal $\beta_{verz}$ ermittelt und mit diesem unter Berücksichtigung verfügbarer Signale des elektronischen Stabilitätsprogramms, vorliegend der Gierrate $r_m$, der aufbaufesten Querbeschleunigung $A_{ym}$ und der Fahrgeschwindigkeit V sowie einer vorgegebenen Zeitkonstanten T das zeitlich unverzögerte Schwimmwinkelsignal $\beta_{unverzögert}$ erzeugt. Das zeitlich verzögerte Schwimmwinkelsignal $\dot{\beta}_{verz}$ wird beispielsweise aus Bilddaten gewonnen, die mit einem optischen Sensor fortlaufend aufgenommen werden, jedoch auch auf andere Weise z.B. aus GPS-Daten gewonnen wird.

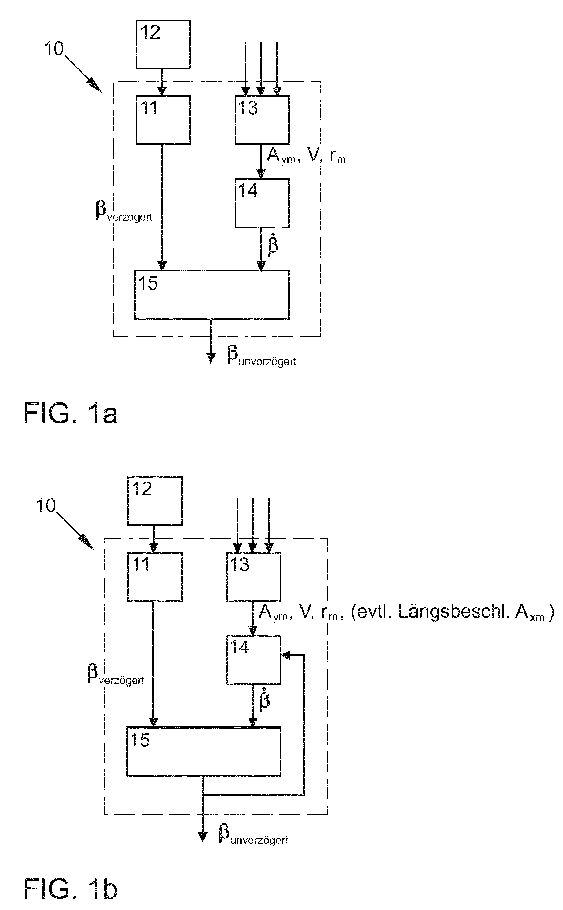

Eine entsprechende Vorrichtung 10 zur Erzeugung eines zeitlich unverzögerten Schwimmwinkelsignals ist in Figur 1 dargestellt. Diese weist eine erste Recheneinrichtung 11 auf, welcher eingangsseitig Signale eines Sensors 12 zur Erfassung von schwimmwinkelrelevanten Größen aufgeschaltet sind. Die erste Recheneinrichtung 11 ist derart konfiguriert, um aus den Sensorsignalen, beispielsweise zweidimensionalen Bilddaten, das zeitlich verzögerte Schwimmwinkelsignal $\beta_{verz}$ als Ausgangssignal zu erzeugen. Dies kann beispielsweise wie in DE 10 2004 019 832 B3 beschrieben erfolgen.

Die Vorrichtung 10 umfasst ferner ein elektronisches Stabilitätsprogramm 13, welches zeitlich aktuelle Signale im Bezug auf fahrdynamikrelevante Parameter wie Gierrate $r_m$, Querbeschleunigung $A_{ym}$ und Fahrgeschwindigkeit V bereitstellt.

Diese Signale werden an eine zweite Recheneinrichtung 14 übergeben, die die Schwimmwinkelgeschwindigkeit berechnet, zum Beispiel mit einer der zwei oben vorgestellten Gleichungen (Gl. 17 oder Gl. 18).

Weiterhin umfasst die Vorrichtung 10 eine dritte Recheneinrichtung 15, die aus dem Ausgangssignal der ersten Recheneinrichtung 11 und der Schwimmwinkelgeschwindigkeit aus der zweiten Recheneinrichtung 14 ein zeitlich unverzögertes Schwimmwinkelsignal $\dot{\beta}_{unverzögert}$ erzeugt und als Ausgangsgröße bereitstellt. Dazu ist die in Gl. 17 angegebene Berechnungsvorschrift in der zweiten Recheneinrichtung 14 implementiert (vgl. Figur 1a). Falls in der zweiten Recheneinrichtung 14 nicht Gl. 6 herangezogen wird, sondern beispielsweise Gl. 5, muss der unverzögerte Schwimmwinkel, d.h. das Ausgangssignal der dritten Recheneinrichtung 15 zur zweiten Recheneinrichtung 14' zurückgeführt werden (vgl. Figur 1 b).

Die Vorrichtung 10 ermöglicht mit geringem Aufwand im Hinblick auf die benötigte Sensorik und vorzuhaltende Rechenkapazität die Bereitstellung eines hochgenauen Schwimmwinkelsignals in Echtzeit.

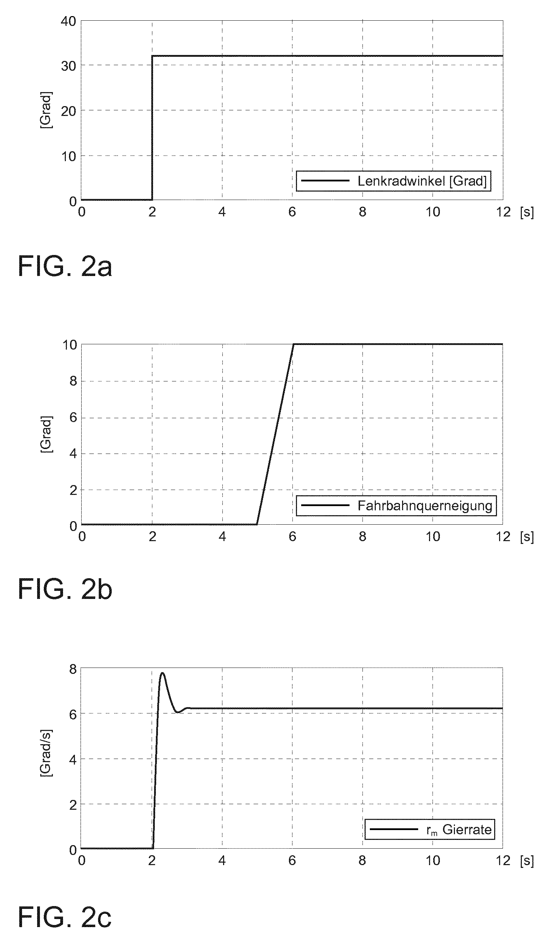

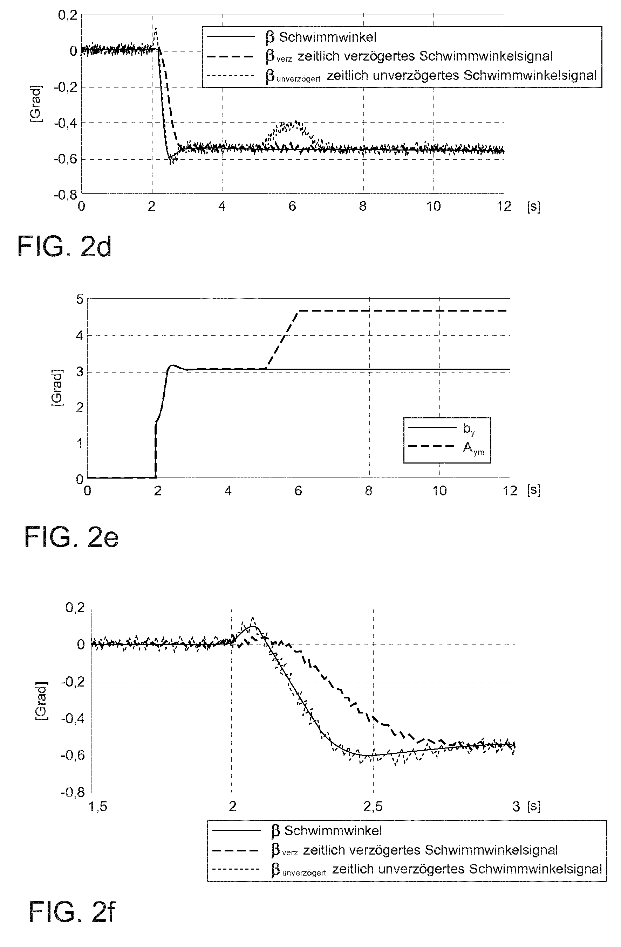

Figur 2 zeigt eine Simulation des erfindungsgemäßen Verfahrens an einem Einspurmodell. Die Verzögerung des Schwimmwinkels, der mittels einer Kamera erfasst wird, ist durch ein PT1-Glied abgebildet, dessen Zeitkonstante T im Ausführungsbeispiel lediglich beispielhaft mit 200ms angesetzt ist.

Figur 2a zeigt den Verlauf des Lenkradwinkels über der Zeit. Zum Zeitpunkt 2s wird ein Lenksprung durchgeführt.

Ferner zeigt Figur 2b eine Störung durch einen Fahrbahnquerneigung, die zwischen den Zeitpunkten 5s und 6s von 0° auf 10° ansteigt.

Figur 2c zeigt den zugehörigen Verlauf der Gierrate $r_m$.

In den Figuren 2d und 2f ist der Verlauf des tatsächlichen Schwimmwinkels β, des zeitlich verzögerten Schwimmwinkelsignals $\beta_{verz}$ und des zeitlich unverzögerten Schwimmwinkelsignals $\beta_{unverzögert}$ dargestellt, wobei in Figur 2f der Bereich um den Zeitpunkt 2s gezoomt ist, um die Reaktion auf den Lenkradsprung darzustellen. Zeitverzögerung und Signalrauschen von $\beta_{verz}$ sind gut zu erkennen. Das Signal $\beta_{unverzögert}$ aus der Signalfusion ist, abgesehen von leichtem Rauschen, identisch mit dem echten Schwimmwinkel β, was zeigt, dass die vorliegende Erfindung auf ganz hervorragende Weise geeignet ist, ein für eine Fahrdynamikregelung geeignetes zeitlich unverzögertes Schwimmwinkelsignal bereitzustellen.

Wie bereits ausgeführt, wird zwischen den Zeitpunkten 5s und 6s die Fahrbahnquerneigung erhöht. Dies führt zu einem Messoffset im Querbeschleunigungssensor. Dieser Offset ist in Figur 2e durch den Anstieg der Querbeschleunigung gut zwischen den Zeitpunkten 5s und 6s zu erkennen. Ein solcher Messoffset, der bei Schätzalgorithmen oft problematisch ist und zu nicht mehr brauchbaren Schwimmwinkelsignalen führt, schlägt sich vorliegend lediglich durch eine kleine Abweichung im erfindungsgemäß ermittelten Schwimmwinkelsignal nieder, die aber sofort wieder verschwindet, nachdem sich die Fahrbahnneigung nicht weiter ändert. Das Signal ist dadurch in einer Fahrdynamikregelung gut verwertbar.

Die Erfindung wurde vorstehend anhand eines Ausführungsbeispiels sowie verschiedener Abwandlungen näher erläutert. Sie ist jedoch nicht auf diese Ausgestaltungsformen beschränkt, sondern umfasst alle durch die Patentansprüche definierten Varianten, auch wenn diese nicht ausdrücklich als Ausführungsbeispiele erläutert sind. Insbesondere können alle einzelnen Merkmale untereinander kombiniert werden, solange dies technisch möglich ist.

Möglich sind insbesondere auch Ansätze, die auf andere Art und Weise aus Schwimmwinkelgeschwindigkeit und verzögertem Schwimmwinkel einen unverzögerten Schwimmwinkel bilden. Zum Beispiel kann man anstatt von einem Verzögerungsglied erster Ordnung von einer reinen Totzeit als Verzögerungsmodell ausgehen.

**Bezugszeichenliste**

| | |
|---|---|
| 10 | Vorrichtung zur Erzeugung eines zeitlich unverzögerten Schwimmwinkelsignals |
| 11 | erste Recheneinrichtung |
| 12 | Sensor zur Erfassung von schwimmwinkelrelevanten Größen |
| 13 | elektronisches Stabilitätsprogramm (ESP) |
| 14, 14' | zweite Recheneinrichtung zur Bildung der Schwimmwinkelgeschwindigkeit |
| 15 | dritte Recheneinrichtung |
| $A_{ym}$ | aufbaufest gemessene Querbeschleunigung |
| $B_y$ | kinematische Querbeschleunigung |
| $r_m$ | Gierrate |
| R | Kurvenradius |
| s | Laplace-Variable |
| T | vorgegebene Zeitkonstante eines PT1-Glieds |
| V | Fahrgeschwindigkeit |
| $\beta_{verz}$ | zeitlich verzögerte Schwimmwinkelsignal |
| $\beta_{unverzögert}$ | zeitlich unverzögertes Schwimmwinkelsignal |
| $\dot{\beta}$ | Schwimmwinkelgeschwindigkeit |

**Patentansprüche**

**1.** Verfahren zur Erzeugung eines Schwimmwinkelsignals, wobei durch Auswertung von Sensorsignalen ein zeitlich verzögertes Schwimmwinkelsignal $\beta_{verz}$ ermittelt, wobei mit diesem zeitlich verzögerten Schwimmwinkelsignal $\beta_{verz}$ unter Berücksichtigung verfügbarer Signale eines elektronischen Stabilitätsprogramms (13) ein zeitlich unverzögertes Schwimmwinkelsignal $\beta_{unverzögert}$ erzeugt wird, wobei aus den verfügbaren Signalen des elektronischen Stabilitätsprogramms (13) eine Schwimmwinkelgeschwindigkeit ermittelt wird und die ermittelte Schwimmwinkelgeschwindigkeit in die Erzeugung des zeitlich unverzögerten Schwimmwinkelsignals $\beta_{unverzögert}$ einbezogen ist, **dadurch gekennzeichnet, dass** der Schwimmwinkel mit folgender Berechnungsvorschrift ermittelt wird:

$$\beta_{unverzögert} = \frac{T \cdot s}{T \cdot s + 1} \cdot \left( \frac{T}{T \cdot s + 1} \cdot \dot{\beta} + \beta_{verz} \right) + \beta_{verz}$$

wobei

s die Laplace-Variable,
T eine vorgegebene Konstante,

$\beta_{unverzögert}$ das unverzögerte Schwimmwinkelsignal,
$\beta_{verz}$ das verzögerte Schwimmwinkelsignal, und
$\dot{\beta}$ die Schwimmwinkelgeschwindigkeit ist.

2. Verfahren nach Anspruch 1, **dadurch gekennzeichnet, dass** in die Erzeugung des zeitlich unverzögerten Schwimmwinkelsignals $\beta_{unverzögert}$ eine vorgegebene Zeitkonstante T einbezogen ist.

3. Verfahren nach einem der Ansprüche 1 oder 2, **dadurch gekennzeichnet, dass** als verfügbare Signale eines elektronischen Stabilitätsprogramms die Gierrate $r_m$, die aufbaufeste Querbeschleunigung $A_{ym}$ und die Fahrgeschwindigkeit V zur Ermittlung der Schwimmwinkelgeschwindigkeit ausgewertet werden.

4. Verfahren nach einem der Ansprüche 1 bis 3, **dadurch gekennzeichnet, dass** das zeitlich verzögerte Schwimmwinkelsignal $\beta_{verz}$ aus mit einem optischen Sensor aufgenommenen Bilddaten oder aus GPS-Daten gewonnen wird.

5. Verfahren nach einem der Ansprüche 1 bis 4 **dadurch gekennzeichnet, dass** das zeitlich verzögerte Schwimmwinkelsignal $\beta_{verz}$ eine Zeitvewrzögerung aufweist und diese Zeitverzögerung durch ein PT1-Glied berücksichtigt wird.

6. Vorrichtung zur Erzeugung eines Schwimmwinkelsignals, umfassend eine erste Recheneinrichtung (11), welcher eingangsseitig Signale eines Sensors (12) zur Erfassung von schwimmwinkelrelevanten Größen aufgeschaltet sind und welche aus diesen als Ausgangssignal ein zeitlich verzögertes Schwimmwinkelsignal $\beta_{verz}$ erzeugt, ein elektronisches Stabilitätsprogramm (13), welches zeitlich aktuelle Signale im Bezug auf fahrdynamikrelevante Parameter bereitstellt,
eine zweite Recheneinrichtung (14) zur Ermittlung der Schwimmwinkelgeschwindigkeit aus vom elektronisches Stabilitätsprogramm (13) bereitgestellten Parametern, und
eine dritte Recheneinrichtung (15), die aus dem Ausgangssignal der ersten Recheneinrichtung (11) und dem Ausgangssignal der zweiten Recheneinrichtung (14) ein zeitlich unverzögertes Schwimmwinkelsignal $\beta_{unverzögert}$ erzeugt und als Ausgangsgröße bereitstellt,
**dadurch gekennzeichnet, dass** in der dritten Recheneinrichtung (15) folgende Berechnungsvorschrift zur Bestimmung des unverzögerten Schwimmwinkelsignals implementiert ist:

$$\beta_{unverzögert} = \frac{T \cdot s}{T \cdot s + 1} \cdot \left( \frac{T}{T \cdot s + 1} \cdot \dot{\beta} + \beta_{verz} \right) + \beta_{verz}$$

wobei

$s$ die Laplace-Variable,
$T$ eine vorgegebene Konstante,
$\beta_{unverzögert}$ das unverzögerte Schwimmwinkelsignal,
$\beta_{verz}$ das verzögerte Schwimmwinkelsignal,
$\dot{\beta}$ die Schwimmwinkelgeschwindigkeit ist.

7. Vorrichtung nach Anspruch 7, **dadurch gekennzeichnet, dass** der Sensor (12) zur Erfassung von schwimmwinkelrelevanten Größen ein optischer Sensor ist, welcher Bilddaten erzeugt, oder ein GPS-Sensor ist.

8. Kraftfahrzeug mit einer Vorrichtung nach einem der Ansprüche 6 oder 7.

**Claims**

1. Method for generating a sideslip angle signal, a temporally delayed sideslip angle signal $\beta_{delayed}$ being determined by evaluating sensor signals, a temporally undelayed sideslip angle signal $\beta_{undelayed}$ being generated with the aid of said temporally delayed sideslip angle signal $\beta_{delayed}$ by taking account of available signals of an electronic stability program (13), a sideslip angle velocity being determined from the available signals of the electronic stability program (13), and the determined sideslip angle velocity being incorporated into the generation of the temporally undelayed sideslip angle signal $\beta_{undelayed}$, **characterized in that** the sideslip angle is determined with the aid of the following

calculation rule:

$$\beta_{undelayed} = \frac{T \cdot s}{T \cdot s + 1} \cdot \left( \frac{T}{T \cdot s + 1} \cdot \dot{\beta} + \beta_{delayed} \right) + \beta_{delayed}$$

in which

s is the Laplace variable,
T is a prescribed constant,
$\beta_{undelayed}$ is the undelayed sideslip angle signal,
$\beta_{delayed}$ is the delayed sideslip angle signal, and
$\dot{\beta}$ is the sideslip angle velocity.

2. Method according to Claim 1, **characterized in that** a prescribed time constant T is incorporated into the generation of the temporally undelayed sideslip angle signal $\beta_{undelayed}$.

3. Method according to either of Claims 1 and 2, **characterized in that** as available signals of an electronic stability program the yaw rate $r_m$, the lateral acceleration $A_{ym}$ in relation to body rigidity and the travel speed V are evaluated in order to determine the sideslip angle velocity.

4. Method according to one of Claims 1 to 3, **characterized in that** the temporally delayed sideslip angle signal $\beta_{delayed}$ is obtained from image data recorded with an optical sensor or from GPS data.

5. Method according to one of Claims 1 to 4, **characterized in that** the temporally delayed sideslip angle signal $\beta_{delayed}$ has a time delay and said time delay is taken into account by a PT1 element.

6. Device for generating a sideslip angle signal, comprising a first computing device (11), to which signals of a sensor (12) are applied on the input side in order to detect variables relevant to sideslip angles, and which generates therefrom as output signal a temporally delayed sideslip angle signal $\beta_{delayed}$, an electronic stability program (13) which provides temporally current signals with reference to parameters relevant to driving dynamics, a second computing device (14) for determining the sideslip angle velocity from parameters provided by the electronic stability program (13), and a third computing device (15), which generates a temporally undelayed sideslip angle signal $\beta_{undelayed}$ from the output signal of the first computing device (11) and the output signal of the second computing device (14), and provides it as output variable, **characterized in that** the following calculation rule for determining the undelayed sideslip angle signal is implemented in a third computing device (15):

$$\beta_{undelayed} = \frac{T \cdot s}{T \cdot s + 1} \cdot \left( \frac{T}{T \cdot s + 1} \cdot \dot{\beta} + \beta_{delayed} \right) + \beta_{delayed}$$

in which

s is the Laplace variable,
T is a prescribed constant,
$\beta_{undelayed}$ is the undelayed sideslip angle signal,
$\beta_{delayed}$ is the delayed sideslip angle signal, and
$\dot{\beta}$ is the sideslip angle velocity.

7. Device according to Claim 7, **characterized in that** the sensor (12) for detecting variables relevant to sideslip angles is an optical sensor which generates image data, or is a GPS sensor.

8. Motor vehicle having a device according to either of Claims 6 and 7.

**Revendications**

1. Procédé pour générer un signal d'angle de flottement, un signal d'angle de flottement retardé dans le temps $\beta_{verz}$ étant déterminé par interprétation de signaux de capteur, un signal d'angle de flottement non retardé dans le temps $\beta_{unverzögert}$ étant généré avec ce signal d'angle de flottement retardé dans le temps $\beta_{verz}$ en tenant compte des signaux disponibles d'un programme de stabilité électronique (13), une vitesse angulaire de flottement étant déterminée à partir des signaux disponibles du programme de stabilité électronique (13) et la vitesse angulaire de flottement déterminée intervenant dans la génération du signal d'angle de flottement non retardé dans le temps $\beta_{unverzögert}$, **caractérisé en ce que** l'angle de flottement est déterminé avec la règle de calcul suivante :

$$\beta_{unverz\ddot{o}gert} = \frac{T \cdot s}{T \cdot s + 1} \cdot \left( \frac{T}{T \cdot s + 1} \cdot \dot{\beta} + \beta_{verz} \right) + \beta_{verz}$$

où
s désigne la variable de Laplace,
T désigne une constante prédéfinie,
$\beta_{unverzögert}$ désigne le signal d'angle de flottement non retardé
$\beta_{verz}$ désigne le signal d'angle de flottement retardé, et $\dot{\beta}$ désigne la vitesse angulaire de flottement.

2. Procédé selon la revendication 1, **caractérisé en ce qu'**une constante de temps T prédéfinie intervient dans la génération du signal d'angle de flottement non retardé dans le temps $\beta_{unverzögert}$.

3. Procédé selon l'une des revendications 1 ou 2, **caractérisé en ce que** le taux de lacet $r_m$, l'accélération transversale fixe de la carrosserie $A_{ym}$ et la vitesse de déplacement V sont utilisés en tant que signaux disponibles d'un programme de stabilité pour la détermination de la vitesse angulaire de flottement.

4. Procédé selon l'une des revendications 1 à 3, **caractérisé en ce que** le signal d'angle de flottement retardé dans le temps $\beta_{verz}$ est obtenu à partir de données d'image enregistrées avec un capteur optique ou de données de GPS.

5. Procédé selon l'une des revendications 1 à 4, **caractérisé en ce que** le signal d'angle de flottement retardé dans le temps $\beta_{verz}$ présente un retard dans le temps et ce retard dans le temps est pris en compte par un élément PT1.

6. Dispositif pour générer un signal d'angle de flottement, comprenant
un premier système de calcul (11) à l'entrée duquel sont connectés les signaux d'un capteur (12) destiné à détecter des grandeurs en rapport avec l'angle de flottement et qui génère à partir de ceux-ci, en tant que signal de sortie, un signal d'angle de flottement retardé dans le temps $\beta_{verz}$,
un programme de stabilité électronique (13) qui délivre des signaux actuels dans le temps en référence à des paramètres concernant la dynamique de conduite,
un deuxième système de calcul (14) destiné à déterminer la vitesse angulaire de flottement à partir des paramètres délivrés par le programme de stabilité électronique (13), et
un troisième système de calcul (15) qui génère un signal d'angle de flottement non retardé dans le temps $\beta_{unverzögert}$ à partir du signal de sortie du premier système de calcul (11) et du signal de sortie du deuxième système de calcul (14) et le délivre en tant que grandeur de sortie,
**caractérisé en ce que** la règle de calcul suivante est mise en oeuvre dans le troisième système de calcul (15) pour déterminer le signal d'angle de flottement non retardé dans le temps :

$$\beta_{unverz\ddot{o}gert} = \frac{T \cdot s}{T \cdot s + 1} \cdot \left( \frac{T}{T \cdot s + 1} \cdot \dot{\beta} + \beta_{verz} \right) + \beta_{verz}$$

où
s désigne la variable de Laplace,
T désigne une constante prédéfinie,
$\beta_{unverzögert}$ désigne le signal d'angle de flottement non retardé
$\beta_{verz}$ désigne le signal d'angle de flottement retardé, et $\dot{\beta}$ désigne la vitesse angulaire de flottement.

7. Dispositif selon la revendication 7, **caractérisé en ce que** le capteur (12) destiné à détecter des grandeurs en rapport avec l'angle de flottement est un capteur optique qui génère des données d'images ou un capteur de GPS.

8. Véhicule automobile équipé d'un dispositif selon l'une des revendications 6 ou 7.

10 ↗

12

11

13

$A_{ym}, V, r_m$

14

$\beta_{verzögert}$

$\dot{\beta}$

15

$\beta_{unverzögert}$

## FIG. 1a

10 ↗

12

11

13

$A_{ym}, V, r_m, (\text{evtl. Längsbeschl. } A_{xm})$

14

$\beta_{verzögert}$

$\dot{\beta}$

15

$\beta_{unverzögert}$

## FIG. 1b

FIG. 2a

FIG. 2b

FIG. 2c

FIG. 2d

FIG. 2e

FIG. 2f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004019832 B3
- DE 102006009682 A1
- DE 10215464 A1
- US 20090276114 A1
- EP 1588910 A1